# EUROPÄISCHE PATENTSCHRIFT

(11) **EP 2 511 081 B1**
(45) Veröffentlichungstag und Bekanntmachung des Hinweises auf die Patenterteilung: **17.04.2019**
(21) Anmeldenummer: 12157081.6
(22) Anmeldetag: 27.02.2012
(51) Int. Cl.: B29C 70/46, B29K 307/04, B29K 309/08

(54) **Aufnahmevorrichtung für Faserhalbzeuge und Verfahren zum Herstellen von faserverstärkten Bauteilen**
Holder device for semi-finished fibre products and method for producing fibre reinforced components
Dispositif de préhension pour demi-produit en fibres et procédé de fabrication de composants renforcés en fibres

(30) Priorität: 15.04.2011 DE 102011007487
(43) Veröffentlichungstag der Anmeldung: 17.10.2012
(73) Patentinhaber: Bayerische Motoren Werke Aktiengesellschaft, 80809 München (DE)
(72) Erfinder: Burlefinger, Hubert, 84095 Furth (DE); Schindlbeck, Martin, 84088 Neufahrn (DE)

(56) Entgegenhaltungen:
- EP-A1- 0 577 505
- EP-A2- 0 393 767
- WO-A1-02/18121
- DE-A1-102008 058 952

## Beschreibung

Die vorliegende Erfindung betrifft ein Verfahren zum Herstellen von faserverstärkten Bauteilen.

Bei der Herstellung von faserverstärkten Bauteilen werden Fasermatten mit einem flüssigen Harz imprägniert, die anschließend weiterverarbeitet werden. Zum Transportieren von mit flüssigem Harz imprägnierten Faserhalbzeugen werden üblicherweise mechanische Greifersysteme eingesetzt, die direkt am Faserwerkstoff angreifen. Bei diesen Greifern wird das Fasermaterial durch Klemmbacken fixiert. Um eine Verschmutzung des Greifers mit flüssigem Harz zu vermeiden, wird dabei das Faserhalbzeug um einen Greifbereich vergrößert. Dieser Greifbereich bleibt trocken, wird also nicht mit dem Harz imprägniert, so dass eine sichere Fixierung erzielt werden kann, ohne den Greifer zu beschmutzen. Solche Greifersysteme sind beispielsweise aus der Patentschrift CH 690 301 A5 bekannt.

Durch die Verlängerung der Faserhalbzeuge um einen trockenen Greiffbereich erhöht sich der Materialeinsatz zur Herstellung des späteren faserverstärkten Bauteils. Gerade bei der Verwendung von sehr teuren Materialien, wie Carbonfasern, erhöhen sich dadurch unnötigerweise die Fertigungskosten zur Herstellung der Bauteile.

Aus der EP 0 393 767 A2 ist ein Verfahren und eine Vorrichtung zum Formen eines Preform-Halbzeugs bekannt.

Ein weiterer Nachteil ist auch darin zu sehen, dass durch die Klemmbacken Kräfte in das Faserhalbzeug eingeleitet werden, die gerade bei empfindlichen Fasermaterialien zu einem Faserverzug führen. Dies führt zu einer Veränderung der Materialeigenschaften des Bauteils.

Ausgehend von diesem Stand der Technik macht es sich vorliegende Erfindung zur Aufgabe, ein vereinfachtes Verfahren anzugeben, mit dem die Nachteile des Standes der Technik überwunden werden. Ferner ist es Aufgabe der Erfindung, ein Verfahren anzugeben, mit dem der Verschnitt an Fasermaterial auf ein Mindestmaß reduziert werden kann, so dass sich eine besonders hohe Nachhaltigkeit ergibt. Eine weitere Aufgabe der Erfindung ist es, ein Verfahren anzugeben, bei dem der Faserverzug in den Faserstrukturen bei deren Transport bzw. deren Lagerung auf ein Mindestmaß reduziert wird.

Diese Aufgabe wird durch ein Verfahren mit den Merkmalen der unabhängigen Ansprüche gelöst. Die abhängigen Ansprüche stellen vorteilhafte Ausführungsformen der Erfindung dar.

Zur Durchführung des Verfahrens wird eine Aufnahmevorrichtung für Faserhalbzeuge mit einer Trägerstruktur, zum Aufnehmen mindestens eines Faserhalbzeugs, und einem Rahmen, der mit der Trägerstruktur in Verbindung steht, verwendet. Weiterhin kann das Faserhalbzeug im Wesentlichen kräftefrei auf einer Oberfläche der Trägerstruktur anordenbar sein. Als Faserhalbzeug kommt hierbei insbesondere ein Gewebe, Geflecht und/oder Gelege aus Glas-, Kohlenstoff- und/oder Aramid-Fasern zum Einsatz. Der Rahmen kann als ein Bauteil eines Greifersystems ausgebildet sein.

Die Trägerstruktur kann eine größere Oberfläche aufweisen als das Faserhalbzeug.

Darüber hinaus kann ein Randbereich der Trägerstruktur fest und/oder nachgiebig mit dem Rahmen verbunden sein. Eine feste Verbindung der Trägerstruktur mit dem Rahmen ergibt den Vorteil, dass bei einem späteren Umformen der Faserstruktur zusammen mit der Trägerstruktur, diese von dem Rahmen zumindest lokal abreißt. Durch Ausgestaltung einer nachgiebigen Verbindung zwischen der Trägerstruktur und dem Rahmen kann beim Umformen des Faserhalbzeugs die Trägerstruktur nachfließen und somit eine ungestörte Umformung des Faserhalbzeugs realisiert werden.

Zusätzlich oder alternativ kann der Rahmen eine Oberfläche aufweisen, die mit einer Oberfläche eines weiteren Rahmens form- und/oder kraftschlüssig in Kontakt bringbar ist, so dass dann eine Verschiebung der zwei Rahmen zueinander verhinderbar ist.

Die Erfindung betrifft ein Verfahren zum Herstellen von faserverstärkten Bauteilen mit den Schritten Positionieren eines Faserhalbzeugs auf einer Trägerstruktur einer Aufnahmevorrichtung, Aufbringen eines flüssigen und/oder teigförmigen Harzes zumindest auf eine der Trägerstruktur abgeneigte Oberfläche des Faserhalbzeugs, Überführen des Faserhalbzeugs in ein Formwerkzeug, Umformen des Faserhalbzeugs, Beaufschlagen des Faserhalbzeugs mit Druck und/oder Wärme und Entnahme des Faserhalbzeugs aus dem Formwerkzeug.

Weiterhin kann nach dem Aufbringen eines flüssigen und/oder teigförmigen Harzes ein zweites Faserhalbzeug unmittelbar auf das Harz aufgelegt werden.

Weiterhin kann nach dem Aufbringen eines flüssigen und/oder teigförmigen Harzes oder nach dem Auflegen des zweiten Faserhalbzeugs eine zweite Aufnahmevorrichtung mit der ersten Aufnahmevorrichtung in Kontakt gebracht werden, wobei das Harz oder das zweite Faserhalbzeug mit der Trägerstruktur der zweiten Aufnahmevorrichtung in Kontakt steht.

Darüber hinaus können die in Kontakt stehenden Aufnahmevorrichtungen um einen Winkel von im Wesentlichen 180° um eine horizontale Achse rotiert werden.

Zusätzlich oder alternativ kann in einem weiteren Schritt die erste Aufnahmevorrichtung entfernt werden und ein flüssiges und/oder teigförmiges Harz zumindest auf eine der Trägerstruktur der zweiten Aufnahmevorrichtung abgeneigte Oberfläche des Faserhalbzeugs aufgebracht werden.

Alternativ dazu kann nach dem Positionieren eines Faserhalbzeugs auf der Trägerstruktur der Aufnahmevorrichtung eine zweite Aufnahmevorrichtung mit der ersten Aufnahmevorrichtung in Kontakt gebracht werden, wobei das Faserhalbzeug zwischen den Trägerstrukturen der ersten und der zweiten Aufnahmevorrichtung fixiert wird. Hieraus ergibt sich der Vorteil, dass das Faserhalbzeug so zwischen den Trägerstrukturen der Aufnahmevorrichtungen gehalten wird, dass selbst bei einer Rotation der Aufnahmevorrichtung ein Verrutschen oder Herausfallen des Faserhalbzeugs aus der Aufnahmevorrichtung ausgeschlossen ist.

Ferner kann ein flüssiges und/oder teigförmiges Harz auf die Oberflächen des Faserhalbzeugs aufgebracht werden, indem das Harz durch die Trägerstruktur hindurch gespritzt, gerollt oder auf sonstige Weise infiltriert wird.

Weiterhin kann nach dem Beaufschlagen mit Druck oder Temperatur ein Randbereich der Trägerstruktur insbesondere mittels Wasserstrahlschneiden oder einem sonstigen trennenden Verfahren durchtrennt werden.

Weiterhin kann mit der zweiten Aufnahmevorrichtung, an der zumindest das erste Faserhalbzeug angeordnet ist, eine dritte Aufnahmevorrichtung an der ein weiteres, drittes Faserhalbzeug angeordnet ist, in Kontakt gebracht werden, so dass die mit Harz versehene Oberflächen der Faserhalbzeuge einander zugewandt sind.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung:

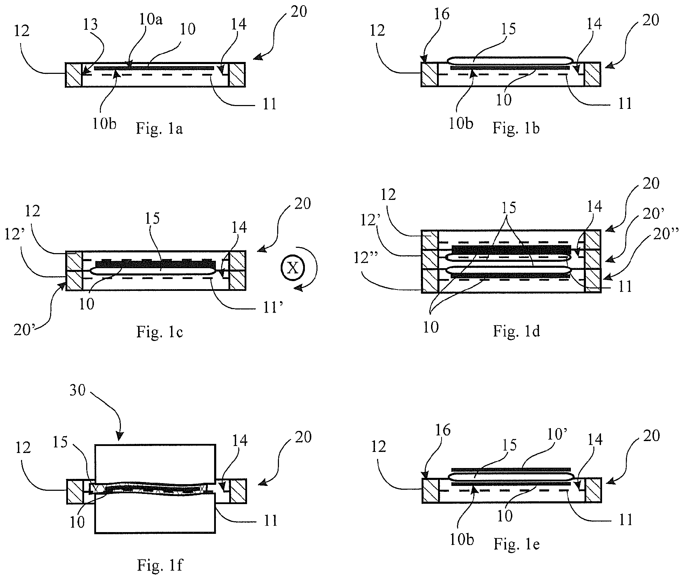

- Figur 1a: eine Aufnahmevorrichtung mit einem daran angeordneten Faserhalbzeug;
- Figur 1b: eine Aufnahmevorrichtung mit einem Faserhalbzeug, wobei ein Harz auf einer Oberfläche des Faserhalbzeugs aufgebracht ist;
- Figur 1c: ein zwischen zwei Aufnahmevorrichtungen eingeklemmtes Faserhalbzeug mit Harzauftrag, das nach dem Harzauftrag um 180° gedreht wurde;
- Figur 1d: eine Anordnung zweier Faserhalbzeuge übereinander, bei der Harz aufgetragen wurde und anschließend eines um 180° gedreht und auf dem anderen abgelegt wurde;
- Figur 1e: eine Anordnung zweier Faserhalbzeuge übereinander, mit einem mittig einseitigen Harzauftrag, und
- Figur 1f: einen Umformvorgang eines Faserhalbzeugs.

In Figur 1a ist eine erste Aufnahmevorrichtung 20 gezeigt, mit der ein erstes Faserhalbzeug 10 aufgenommen und gehalten wird. Die erste Aufnahmevorrichtung 20 umfasst einen ersten Rahmen 12 und eine erste Trägerstruktur 11. Die Trägerstruktur 11 ist als ein sehr dünnes Gitter ausgebildet, das aus einem Textilwerkstoff mit geringem Flächengewicht besteht. Als Textilwerkstoff eignen sich preisgünstige Faserwerkstoffe, beispielsweise aus gebundenen Glas- und/oder Synthesefasern, mit möglichst geringer Dicke bzw. Durchmesser, bevorzugt im Wertebereich von 0,15 mm oder kleiner, und einem möglichst geringen Flächengewicht. Bei dem Faserhalbzeug 10 handelt es sich bevorzugt um eine Fasermatte, die aus einem Gewebe, Gelege oder Geflecht aus Kohlenstofffasern, Glasfasern, Aramidfasern oder einer Kombination daraus besteht.

In einem Randbereich 13 der Trägerstruktur 11 ist diese mit dem Rahmen 12 fest verbunden. Alternativ zu der in Figur 1a dargestellten festen Verbindung, kann die Trägerstruktur 11 auch gleitend in dem Rahmen 12 aufgenommen sein, so dass bei einer Verformung der Trägerstruktur 11 Tägerstrukturmaterial aus dem Außenbereich des Rahmens 12 in den Innenbereich nachrutschen kann.

Die Faserstruktur bzw. das Faserhalbzeug 10 liegt unmittelbar auf der Oberfläche 14 der Trägerstruktur 11 auf und hat somit eine der Trägerstruktur 11 zugewandte Oberfläche 10b und eine der Trägerstruktur 11 abgewandte Oberfläche 10a. Auf diese der Trägerstruktur 11 abgewandten Oberfläche 10a wird ein Harz 15 aufgebracht, um das Faserhalbzeug 10 zu imprägnieren, wie in Figur 1b dargestellt.

Um einen mittig liegenden zweiseitigen Harzauftrag zu ermöglichen, wird eine zweite Aufnahmevorrichtung 20' mit der ersten Aufnahmevorrichtung 20 in Kontakt gebracht. Beide Aufnahmevorrichtungen 20, 20' haben den gleichen strukturellen Aufbau mit einem Rahmen 12, 12' und eine Trägerstruktur 11, 11', wie oben beschrieben. Durch Positionierung einer zweiten Aufnahmevorrichtung 20' auf der ersten Aufnahmevorrichtung 20 wird das Faserhalbzeug 10 so fixiert, dass eine Drehbewegung des Faserhalbzeugs 10 bzw. der beiden Aufnahmevorrichtungen 20, 20' möglich ist, ohne dass das Faserhalbzeug 10 verrutscht bzw. herausfällt. Dabei steht das Faserhalbzeug 10 mit einer Oberfläche 10b, die der ersten Trägerstruktur 11 zugewandt ist, mit der ersten Aufnahmevorrichtung 20 in Berührung. Darüber hinaus steht das Faserhalbzeug 10 an seiner Oberfläche 10a, die der Trägerstruktur 11 der ersten Aufnahmevorrichtung 20 abgewandt ist, über das Harz 15 mit der Trägerstruktur 11' der zweiten Aufnahmevorrichtung 20' in Berührung. In diesem Zustand kann das Faserhalbzeug 10 um eine horizontale Achse X gedreht bzw. geschwenkt werden, deren Endposition in Figur 1c dargestellt ist.

Die in Figur 1c dargestellte Anordnung wird dann auf eine weitere, dritte Aufnahmevorrichtung 20" aufgesetzt, in der sich ein weiteres Faserhalbzeug 10 mit einem Harz 15 befindet, wie in Figur 1b dargestellt. Es ergibt sich die in Figur 1d abgebildete Anordnung, bei der zwischen zwei Faserhalbzeugen 10 zwei Schichten Harz 15 vorgesehen sind. Dabei kommt der Rahmen 12' der zweiten Aufnahmevorrichtung 20' mit dem Rahmen 12" der dritten Aufnahmevorrichtung 20" in berührenden Kontakt.

Eine weitere, alternative Ausführungsform des Verfahrens ist in Figur 1e dargestellt, bei der ein erstes Faserhalbzeug 10 auf eine Trägerstruktur 11 einer ersten Aufnahmevorrichtung 20 aufgelegt wird und anschließend eine Harzschicht 15 aufgetragen wird. Danach wird ein weiteres Faserhalbzeug 10' auf die Harzschicht 15 aufgelegt, um eine Faserhalbzeuganordnung zu erzeugen, mit einem mittigen Harzauftrag. Die einzelnen Faserhalbzeuge 10, 10' sind dabei nur einseitig mit Harz 15 versehen. Auch diese Anordnung kann wie bereits oben beschrieben um 180° rotiert und auf eine weitere Aufnahmevorrichtung 20 aufgelegt werden.

Um das Faserhalbzeug 10 bzw. die Anordnung von Faserhalbzeugen 10 in eine vorbestimmte äußere Form zu überführen, wird dieses in ein Umformwerkzeug 30 eingebracht. Ein derartiges Umformwerkzeug kann beispielsweise eine Presse 30 sein. Dabei können alle Anordnungen, die in den Figuren 1b, 1c. 1d und 1e gezeigt sind, zwischen zwei Werkzeughälften dieses Umformwerkzeuges 30 eingebracht werden. Durch Zusammenfahren der Werkzeughälften des Umformwerkzeugs 30 wird das Faserhalbzeug 10 in eine vorbestimmte Form überführt, die der Kontur des Umformwerkzeugs 30 entspricht. Gleichzeitig kann das Faserhalbzeug 10 mit Druck und/oder Wärmeenergie beaufschlagt werden. Wie in Figur 1f beispielhaft dargestellt, kann dabei das Harz 15 auch seitlich zwischen den Werkzeugformhälften hervortreten.

Aufgrund des geringen Gewichtes der textilen Trägerstruktur 11, 11' und deren guten Drapiereigenschaften kann dieses bei der Bearbeitung des Faserhalbzeugs 10 in einem Umformwerkzeug 30 verbleiben und zu einem dreidimensionalen, faserverstärkten Bauteil verarbeitet werden. Während dieses Verarbeitungsschrittes, d.h. während des Umformens des Faserhalbzeugs 10 und des Aushärtens des Harzes 15 kann die Trägerstruktur 11 lokal einreißen oder auch vollständig von dem Rahmen 12 abreißen. Die Stellen, an denen die Trägerstruktur 11 noch mit dem Rahmen 12 verbunden ist, müssen in einem weiteren Schritt zerstört werden, so dass das fertige Bauteil aus dem Rahmen 12 herausgelöst werden kann. Hierzu eignen sich Verfahren wie Wasserstrahlschneiden, Laserstrahlschneiden, oder Schneiden mit mechanischen scharfen Kanten um die Trägerstruktur 11, 11' in seinem Randbereich 13 aufzutrennen.

Aufgrund der Handhabung der Faserhalbzeuge 10 bzw. des Faserhalbzeugs 10 mit der Trägerstruktur 11, kann auf den Einsatz von mechanischen Greifern, die direkt an dem Faserhalbzeug angreifen, sowie auf den dadurch notwendigen vergrößerten Bereich des Faserhalbzeugs 11 verzichtet werden. Dadurch reduziert sich nicht nur der entsprechende Materialeinsatz von Faserhalbzeugen 10, sondern auch der entstehende Verschnitt. Weiterhin werden durch den Verzicht auf Greifer keine Kräfte in das Faserhalbzeug 10 eingeleitet, so dass ein Faserverzug vermieden werden kann. Dadurch eignet sich die erfindungsgemäße Vorrichtung bzw. das erfindungsgemäße Verfahren zur Verarbeitung sensibler Faserhalbzeuge.

### Bezugszeichenliste

10. Faserhalbzeug
11. Trägerstruktur
12. Rahmen
13. Randbereich der Trägerstruktur
14. Oberfläche des Trägerstruktur
15. Harz
16. Oberfläche des Rahmens
20. Aufnahmevorrichtung
30. Umformwerkzeug

## Patentansprüche

1. Verfahren zum Herstellen von faserverstärkten Bauteilen, mit den Schritten:
- Positionieren eines Faserhalbzeugs (10) auf einer Oberfläche (14) einer Trägerstruktur (11) einer Aufnahmevorrichtung (20), welche die Trägerstruktur (11), zum Aufnehmen mindestens eines Faserhalbzeugs (10), und einen Rahmen (12), der mit der Trägerstruktur (11) in Verbindung steht, aufweist
- Aufbringen eines flüssigen und/oder teigförmigen Harzes (15) zumindest auf eine der Trägerstruktur (11) abgeneigten Oberfläche (10a) des Faserhalbzeugs (10),
- Überführen des Faserhalbzeugs (10) in ein Umformwerkzeug (30),
- Umformen des Faserhalbzeugs (10),
- Beaufschlagen der Faserhalbzeugs (10) mit Druck und/oder Wärme, und
- Entnahme des Faserhalbzeugs (10) aus dem Umformwerkzeug (30).

2. Verfahren nach Anspruch 1, **dadurch gekennzeichnet, dass**
- nach dem Aufbringen eines flüssigen und/oder teigförmigen Harzes (15),
- ein zweites Faserhalbzeug (10') auf das Harz (15) aufgelegt wird.

3. Verfahren nach Anspruch 1 oder 2, **dadurch gekennzeichnet, dass**
- nach dem Aufbringen eines flüssigen und/oder teigförmigen Harzes (15), oder
- nach dem Auflegen des zweiten Faserhalbzeugs (10')
- eine zweite Aufnahmevorrichtung (20) mit der ersten Aufnahmevorrichtung (20) in Kontakt gebracht wird, wobei das Harz (15) oder das zweite Faserhalbzeug (10') mit der Trägerstruktur (11) der zweiten Aufnahmevorrichtung (20) in Kontakt steht.

4. Verfahren nach Anspruch 3, **dadurch gekennzeichnet, dass**
- die in Kontakt stehenden Aufnahmevorrichtungen (20) um einen Winkel von im Wesentlichen 180 Grad um eine horizontale Achse (X) rotiert werden.

5. Verfahren nach Anspruch 4, **dadurch gekennzeichnet, dass**
- die erste Aufnahmevorrichtung (20) entfernt wird und
- ein flüssiges und/oder teigförmiges Harz (15) zumindest auf eine der Trägerstruktur (11) der zweiten Aufnahmevorrichtung (20) abgeneigten Oberfläche (10b) des Faserhalbzeugs (10) aufgebracht wird.

6. Verfahren nach Anspruch 1, **dadurch gekennzeichnet, dass**
- nach dem Positionieren eines Faserhalbzeugs (10) auf der Trägerstruktur (11) der Aufnahmevorrichtung (20),
- eine zweite Aufnahmevorrichtung (20) mit der ersten Aufnahmevorrichtung (20) in Kontakt gebracht wird, wobei das Faserhalbzeug (10) zwischen den Trägerstrukturen (11) der ersten und der zweiten Aufnahmevorrichtung (20) fixiert wird.

7. Verfahren nach Anspruch 6, **dadurch gekennzeichnet, dass**
- ein flüssiges und/oder teigförmiges Harz (15), durch die Trägerstruktur (11) hindurch, auf die Oberflächen (10a, 10b) des Faserhalbzeugs (10) aufgebracht wird.

8. Verfahren nach einem der Ansprüche 1 bis 7, **dadurch gekennzeichnet, dass**
- nach dem Beaufschlagen mit Druck und/oder Temperatur ein Randbereich (13) der Trägerstruktur (11) insbesondere mittels Wasserstrahlschneiden oder einem sonstigen Trennverfahren durchtrennt wird.

9. Verfahren nach einem der vorhergehenden Ansprüche 4 bis 8, **dadurch gekennzeichnet, dass**
- die zweite Aufnahmevorrichtung (20), an der zumindest das erste Faserhalbzeug (10) angeordnet ist, mit
- einer dritten Aufnahmevorrichtung (20), an der ein drittes Faserhalbzeug (10) angeordnet ist, in Kontakt gebracht wird, so dass mit Harz (15) versehene Oberflächen (10a) der Faserhalbzeuge (10) einander zugewandt sind.

## Claims

1. A method for producing fibre-reinforced components, having the steps:
- positioning a semi-finished fibre product (10) on a surface (14) of a support structure (11) of a receiving device (20), which has the support structure (11), for receiving at least one semi-finished fibre product (10), and a frame (12) which is connected to the support structure (11),
- applying a liquid and/or pasty resin (15) at least to a surface (10a) of the semi-finished fibre product (10) which is tilted away from the support structure (11),
- transferring the semi-finished fibre product (10) into a forming mould (30),
- forming the semi-finished fibre product (10),
- subjecting the semi-finished fibre product (10) to pressure and/or heat, and
- removing the semi-finished fibre product (10) from the forming mould (30).

2. A method according to Claim 1, **characterised in that**
- after the application of a liquid and/or pasty resin (15)
- a second semi-finished fibre product (10') is placed on the resin (15).

3. A method according to Claim 1 or 2, **characterised in that**
- after the application of a liquid and/or pasty resin (15), or
- after the placing of the second semi-finished fibre product (10')
- a second receiving device (20) is brought into contact with the first receiving device (20), the resin (15) or the second semi-finished fibre product (10') being in contact with the support structure (11) of the second receiving device (20).

4. A method according to Claim 3, **characterised in that**
- the receiving devices (20) which are in contact are rotated about a horizontal axis (X) through an angle of substantially 180 degrees.

5. A method according to Claim 4, **characterised in that**
- the first receiving device (20) is removed and
- a liquid and/or pasty resin (15) is applied at least to a surface (10b) of the semi-finished fibre product (10) which is tilted away from the support structure (11) of the second receiving device (20).

6. A method according to Claim 1, **characterised in that**
- after the positioning of a semi-finished fibre product (10) on the support structure (11) of the receiving device (20),
- a second receiving device (20) is brought into contact with the first receiving device (20), the semi-finished fibre product (10) being fixed between the support structures (11) of the first and the second receiving device (20).

7. A method according to Claim 6, **characterised in that**
- a liquid and/or pasty resin (15) is applied to the surfaces (10a, 10b) of the semi-finished fibre product (10), through the support structure (11).

8. A method according to one of Claims 1 to 7, **characterised in that**
- after the subjecting to pressure and/or temperature an edge region (13) of the support structure (11) is severed in particular by means of waterjet cutting or another severing method.

9. A method according to one of the preceding Claims 4 to 8, **characterised in that**
- the second receiving device (20), on which at least the first semi-finished fibre product (10) is arranged, is brought into contact with
- a third receiving device (20), on which a third semi-finished fibre product (10) is arranged, so that surfaces (10a) of the semi-finished fibre products (10) which are provided with resin (15) face one another.

## Revendications

1. Procédé de fabrication d'éléments renforcés par des fibres comprenant des étapes consistant à :
- positionner un produit semi-fini fibreux (10) sur une surface (14) d'une structure de support (11) d'un dispositif de réception (20) qui comporte la structure de support (11) permettant de recevoir au moins un produit semi-fini fibreux (10) et un cadre (12) relié à la structure de support (11),
- appliquer une résine liquide et/ou pâteuse (15) au moins sur une surface (100) opposée à la structure de support (11) du produit semi-fini fibreux (10),
- transférer le produit semi-fini fibreux (10) dans un outil de mise en forme (30),
- mettre en forme le produit semi-fini fibreux (10),
- soumettre le produit semi-fini fibreux (10) à l'action de la pression et/ou de la chaleur, et
- extraire le produit semi-fini fibreux (10) de l'outil de mise en forme (30).

2. Procédé conforme à la revendication 1,
**caractérisé en ce que**
- après l'application de la résine liquide et/ou pâteuse (15),
- un second produit semi-fini fibreux (10') est mis en place sur la résine (15).

3. Procédé conforme à la revendication 1 ou 2,
**caractérisé en ce que**
- après l'application d'une résine liquide et/ou pâteuse (15), ou
- après la mise en place du second produit semi-fini fibreux (10'),
- un second dispositif de réception (20) est mis en contact avec le premier dispositif de réception (20), la résine (15) ou le second produit semi-fini fibreux (10') étant en contact avec la structure de support (11) du second dispositif de réception (20).

4. Procédé conforme à la revendication 3,
**caractérisé en ce que**
les dispositifs de réception (20) mis en contact sont tournés d'un angle d'environ 180° autour d'un axe horizontal (X).

5. Procédé conforme à la revendication 4,
**caractérisé en ce que**
- le premier dispositif de réception (20) est enlevé, et
- une résine liquide et/ou pâteuse (15) est appliquée au moins sur une surface (10b) du produit semi-fini fibreux (10) opposée à la structure de support (11) du second dispositif de réception (20).

6. Procédé conforme à la revendication 1,
**caractérisé en ce que**
- après le positionnement d'un produit semi-fini fibreux (10) sur la structure de support (11) du dispositif de réception (20),
- un second dispositif de réception (20) est mis en contact avec le premier dispositif de réception (20), le produit semi-fini fibreux (10) étant fixé entre les structures de support (11) du premier et du second dispositifs de réception (20).

7. Procédé conforme à la revendication 6,
**caractérisé en ce qu'**
- une résine liquide et/ou pâteuse (15) est appliquée au travers de la structure de support (11) sur les surfaces (10a, 10b) du produit se-mi-fini à base fibreux (10).

8. Procédé conforme à l'une des revendications 1 à 7,
**caractérisé en ce qu'**
après l'exposition à la pression et/ou à la température, une zone de bord (13) de la structure de support (11) est séparée en particulier par découpe à l'aide d'un jet d'eau ou tout autre procédé de séparation.

9. Procédé conforme à l'une des revendications 4 à 8,
**caractérisé en ce que**
- le second dispositif de réception (20) sur lequel au moins le premier produit semi-fini fibreux (10) est installé et mis en contact avec,
- un troisième dispositif de réception (20) sur lequel un troisième produit semi-fini fibreux (10) est installé de sorte que les surfaces (10a) équipées de résine (15) des produits semi-finis fibreux (10) soient tournées les unes vers les autres.
